# EUROPEAN PATENT APPLICATION

(11) **EP 4 495 729 A1**
(43) Date of publication of application: **22.01.2025**
(21) Application number: 23769578.8
(22) Date of filing: 03.03.2023
(51) Int. Cl.: G06E 3/00, G06N 3/067

(54) **DATA PROCESSING METHOD AND SYSTEM**

(30) Priority: 15.03.2022 CN 202210252872
(71) Applicant: Shanghai Xizhi Technology Co., Ltd., Shanghai 201203 (CN)
(72) Inventor: MENG, Huaiyu, Shanghai 201203 (CN); SHEN, Yichen, Shanghai 201203 (CN); YU, Shanshan, Shanghai 201203 (CN); ANDREW, Knyazev, Shanghai 201203 (CN)
(74) Representative: Haseltine Lake Kempner LLP
(86) International application number: PCT/CN2023/079466
(87) International publication number: WO 2023/174072

(57) **Abstract**

A method and system for data processing. The method comprises the following steps: converting input data into optical signals (S1); performing a matrix-vector multiplication on the input data carried by the optical signals and a weight matrix using a plurality of photonic multipliers, wherein the weight matrix determines the problem to be solved by the data processing (S2); and converting the optical signals resulting from the multiplication into output data (S3). The method can be applied to systems and algorithms for solving the problems of data clustering, labeling, classification, and semantic segmentation. Using photonic multipliers for the most time- and energy-consuming matrix-vector multiplications can greatly reduce both computation time and energy consumption, resulting in faster processing speeds and improved energy efficiency.

## Description

### CROSS-REFERENCE TO RELATED APPLICATION(S)

This application claims the benefit of, and priority to, the Chinese Patent Application No. 202210252872.1, titled "A Method and System for Data Processing," filed on March 15, 2022, which is herein incorporated by reference in its entirety.

### FIELD OF THE INVENTION

The present invention relates to the field of electro-optical hybrid computer systems, and more specifically, to a method and system for data processing.

### BACKGROUND OF THE INVENTION

Data labeling and classification are classic topics in data science and machine learning, focused on enhancing the quality and speed of processing while reducing error rates, especially for real-time streaming data. The rapid decline in the costs of data acquisition, communication, and storage technologies has made the accumulation of vast amounts of data economically feasible.

In prior art, tasks like data labeling and classification are typically carried out on digital electronic devices, with matrix-vector multiplication being one of the most time- and energy-intensive operations. Although digital electronic circuits, such as those based on Graphics Processing Units (GPUs) or Field-Programmable Gate Arrays (FPGAs), have been developed to manage large-scale computations, the computation speed and energy efficiency of these devices have become bottlenecks in performing such tasks.

### SUMMARY OF THE INVENTION

The present invention provides a method and system for data processing using photonic multipliers and/or optical networks to perform matrix-vector multiplication, which can reduce computation time and energy consumption.

In one aspect, the present invention provides a method for data processing, comprising the following steps: converting input data into optical signals; performing a matrix-vector multiplication on the input data carried by the optical signals and a weight matrix using a plurality of photonic multipliers, wherein the weight matrix determines the problem to be solved by the data processing; and converting the optical signals resulting from the multiplication into output data.

In some embodiments, the initial input data comprises an initial approximate solution to the problem determined by the weight matrix, and the output data includes an updated approximate solution to the problem determined by the weight matrix.

In some embodiments, the matrix-vector multiplication is performed in a loop, with the output data from the previous cycle serving as the input data for the current cycle. Wherein the output data from each cycle forms a sequence of updated approximate solutions to the problem determined by the weight matrix.

In some embodiments, the problem determined by the weight matrix includes one or any combination of the following: data clustering, labeling, classification, and semantic segmentation. In some embodiments, the weight matrix is determined by a weighted graph. In some embodiments, the vertices of the weighted graph correspond to data points, and the edges correspond to the weights that reflect the correlations or interconnections between pairs of the data points.

In some embodiments, the weights in the weighted graph are determined by mutual correspondence between data points and the goals of one or any combination of the following: data clustering, labeling, classification, and semantic segmentation. In some embodiments, if adjacent data points are attracted to or correlated with each other, the corresponding weight is positive; if the adjacent data points are neutral or uncorrelated, the corresponding weight is zero; if the adjacent data points are repulsive or anticorrelated, the corresponding weight is negative.

In some embodiments, the initial input data includes a plurality of vectors with numerical components, which is used to determine cluster assignments, data labels, data classes, and semantic data segments by performing clustering, labeling, classification, and/or semantic segmentation on the numerical components.

Accordingly, the present invention also provides a system for data processing, comprising: a first conversion module for converting input data into optical signals; a photonic computing module, in communication with the first conversion module, comprising a plurality of photonic multipliers, wherein the photonic computing module is configured to perform a matrix-vector multiplication on the input data carried by the optical signals and a weight matrix, using the plurality of photonic multipliers, wherein the weight matrix determines the problem to be solved by the data processing; and a second conversion module, in communication with the photonic computing module, for converting the optical signals resulting from the multiplication into output data.

In some embodiments, the first conversion module includes: a digital-to-analog converter for converting the input data into analog input signals; and an optical modulator, in communication with the digital-to-analog converter, for modulating the analog input signals onto optical waves to generate the optical signals.

In some embodiments, the system further comprises a light source for generating the optical waves or an optical coupler for receiving the optical waves generated by an external light source.

In some embodiments, the second conversion module includes: a photoelectric converter, in communication with the photonic computing module, for converting the optical signals resulting from the multiplication into analog output signals; and an analog-to-digital converter, in communication with the photoelectric converter, for converting the analog output signals into digital output signals.

In some embodiments, the system further comprises a guiding controller, in communication with the photonic computing module, to provide the weight matrix.

In some embodiments, the initial input data of the first conversion module includes an initial approximate solution to the problem determined by the weight matrix, and the output data of the second conversion module includes an updated approximate solution to the problem determined by the weight matrix.

In some embodiments, the system further comprises a digital memory unit, in communication with the first and second conversion modules, for storing the input data and output data. The processes performed by the first conversion module, photonic computing module, and second conversion module are executed in a loop, with the digital memory unit using the output data from the previous cycle as the input data for the current cycle, and storing the output data from each cycle as a sequence of updated approximate solutions to the problem determined by the weight matrix.

In some embodiments, the problem determined by the weight matrix includes one or any combination of the following: data clustering, labeling, classification, and semantic segmentation. In some embodiments, the initial input data includes a plurality of vectors with numerical components, which is used to determine cluster assignments, data labels, data classes, and semantic data segments by performing clustering, labeling, classification, and/or semantic segmentation on the numerical components.

In another aspect, the present invention also provides a method for data processing, comprising the following steps: carrying input data onto optical waves through modulation; transmitting the input data carried by the optical waves, through an optical network, to a plurality of electronic multipliers; performing a matrix-vector multiplication on the input data and a weight matrix using the plurality of electronic multipliers, wherein the weight matrix determines the problem to be solved by the data processing; and outputting the result of the multiplication as output data.

In some embodiments, the initial input data includes an initial approximate solution to the problem determined by the weight matrix, and the output data includes an updated approximate solution to the problem determined by the weight matrix.

In some embodiments, the matrix-vector multiplication is performed by the electronic multipliers in a loop, with the output data from the previous cycle serving as the input data for the current cycle. Wherein the output data from each cycle forms a sequence of updated approximate solutions to the problem determined by the weight matrix.

In some embodiments, the problem determined by the weight matrix includes one or any combination of the following: data clustering, labeling, classification, and semantic segmentation. In some embodiments, the weight matrix is determined by a weighted graph.

In some embodiments, the vertices of the weighted graph correspond to data points, and the edges correspond to the weights that reflect the correlations or interconnections between pairs of the data points. In some embodiments, the weights in the weighted graph are determined by mutual correspondence between data points and the goals of one or any combination of the following: data clustering, labeling, classification, and semantic segmentation. If adjacent data points are attracted to or correlated with each other, the corresponding weight is positive; if the adjacent data points are neutral or uncorrelated, the corresponding weight is zero; if the adjacent data points are repulsive or anticorrelated, the corresponding weight is negative.

In some embodiments, the initial input data includes a plurality of vectors with numerical components, which is used to determine cluster assignments, data labels, data classes, and semantic data segments by performing clustering, labeling, classification, and/or semantic segmentation on the numerical components.

In some embodiments, the plurality of electronic multipliers communicates with each other through the optical network.

Accordingly, the present invention also provides a system for data processing, which comprises: an input module for inputting input data; an optical modulator for carrying the input data onto optical waves through modulation; an electronic computing module, in communication with the optical modulator via an optical network, comprising a plurality of electronic multipliers, wherein the electronic computing module is configured to receive the input data carried by the optical waves through the optical network and perform a matrix-vector multiplication on the input data and a weight matrix, using the plurality of electronic multipliers, wherein the weight matrix determines the problem to be solved by the data processing; and an output module in communication with the electronic computing module, for outputting the result of the multiplication as output data.

In some embodiments, the optical modulator and optical network are configured within one or more photonic chips. In some embodiments, one or more of the input module, electronic multipliers, and output module are configured within one or more electronic chips.

In some embodiments, the electronic chips are mounted above or below the photonic chips, with the electronic chips communicating with each other through the optical network in the photonic chips.

In some embodiments, the output module communicates with the electronic computing module through the optical network, with the data resulting from the multiplication being carried onto optical waves through modulation and transmitted via the optical network to the output module.

In some embodiments, the system further includes a light source for generating the optical waves or an optical coupler for receiving the optical waves generated by an external light source.

In some embodiments, the initial input data of the input module includes an initial approximate solution to the problem determined by the weight matrix, and the output data of the output module includes an updated approximate solution to the problem determined by the weight matrix.

In some embodiments, the system further includes a digital memory unit, in communication with the input module and the output module, for storing the input and output data. The electronic multipliers perform the matrix-vector multiplication in a loop, with the digital memory unit using the output data from the previous cycle as the input data for the current cycle, and storing the output data from each cycle as a sequence of updated approximate solutions to the problem determined by the weight matrix.

In some embodiments, the problem determined by the weight matrix includes one or any combination of the following: data clustering, labeling, classification, and semantic segmentation. In some embodiments, the initial input data includes a plurality of vectors with numerical components, which is used to determine cluster assignments, data labels, data classes, and semantic data segments by performing clustering, labeling, classification, and/or semantic segmentation on the numerical components.

According to embodiments of the present invention, photonic multipliers are employed for the most time-consuming and energy-intensive matrix-vector multiplication and data transmission in systems and algorithms used to solve problems such as data clustering, labeling, classification, and semantic segmentation. Additionally, optical networks may also be utilized for data transmission. This approach reduces both computation and data transmission time and energy consumption, thereby increasing the system's processing speed and reducing energy usage.

Aspects, features, advantages and the like of the embodiments will be described in greater detail by reference to the drawings. The aspects, features, advantages and the like will be apparent according to the detailed description by reference to the drawings.

### BRIEF DESCRIPTION OF THE DRAWINGS

Figure 1 is a flowchart illustrating a method for data processing according to an embodiment of the present invention.
Figure 2 is a block diagram showing an example of a system for data processing according to an embodiment of the present invention.
Figure 3 is a block diagram showing another example of a system for data processing according to an embodiment of the present invention.
Figure 4 is a block diagram showing yet another example of a system for data processing according to an embodiment of the present invention.
Figure 5 is a flowchart illustrating a method for data processing according to another embodiment of the present invention.
Figure 6 is a block diagram showing an example of a system for data processing according to another embodiment of the present invention.
Figure 7 is a block diagram showing another example of a system for data processing according to another embodiment of the present invention.
Figure 8 is a block diagram showing yet another example of a system for data processing according to another embodiment of the present invention.

### DETAI'LED DESCRIPTION OF THE INVENTION

To facilitate the understanding of various aspects, features, and advantages of the technical solutions provided by this invention, a detailed description of the invention is provided below in conjunction with the accompanying drawings. It should be understood that the following embodiments are merely illustrative and not intended to limit the scope of the invention.

The terms "comprising," "comprise," "including," "include," or similar terms used herein are open-ended and should be interpreted as "including but not limited to." The term "approximately" or similar terms refer to an acceptable range of error, within which a person skilled in the art can address the technical problem and achieve a substantially similar technical effect.

Furthermore, the term "connection" includes any direct or indirect means of connection. Therefore, if a first device is described as being connected to a second device, it implies that the first device can be directly connected to the second device or indirectly connected through other devices. The term "communication" refers to the transmission of information, data, messages, or signals between two objects, including sending, receiving, and interacting.

The terms "first," "second," and similar designations are used to distinguish between different devices, modules, structures, etc., and do not imply any sequential order, nor do they indicate that "first" and "second" must be of different types. **In** addition, in the description, claims, and drawings of this application, certain processes are described with multiple operations or steps in a specific sequence. These operations or steps do not have to be performed in the order presented or may be executed in parallel. The step numbers, such as S1, S2, etc., are merely used to differentiate between various operations or processes, and these numbers themselves do not indicate any execution order. Moreover, these processes may involve more or fewer operations or steps, and the operations may be executed sequentially or in parallel.

In data science and machine learning, in order to improve the quality and speed of data processing while reducing error rates, operations such as data labeling and classification are typically performed. This is especially important for real-time streaming data. In these fields, problems of data clustering, labeling, classification, and semantic segmentation often need to be solved on the edge and in real time, where the computation speed and energy use are crucial. In systems and algorithms for solving problems of data clustering, labeling, classification, and semantic segmentation, the most time and energy consuming operation comprise matrix-vector multiplications. This invention proposes a data processing method and system that utilize photonic multipliers for computation and/or optical networks for data transmission, effectively increasing processing speed while reducing energy consumption.

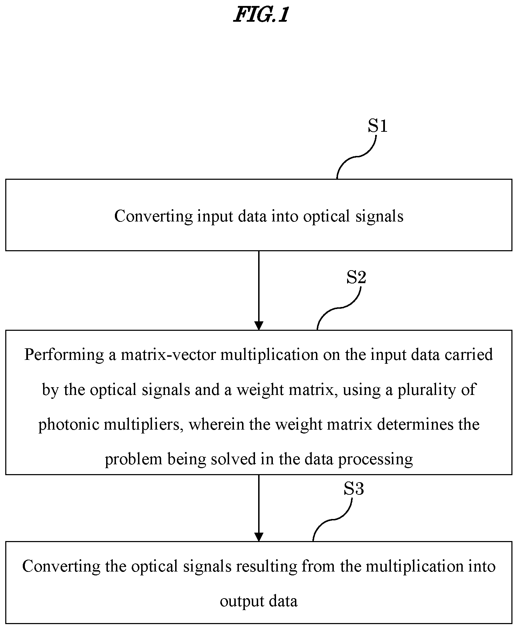

Figure 1 illustrates a method for data processing according to an embodiment of the present invention. As shown in Figure 1, the method includes the following steps:
S1: Converting input data into optical signals.
S2: Performing a matrix-vector multiplication on the input data carried by the optical signals and a weight matrix, using a plurality of photonic multipliers, wherein the weight matrix determines the problem being solved in the data processing.
S3: Converting the optical signals resulting from the multiplication into output data.

In some embodiments, in step S1, converting input data into optical signal comprises using a digital-to-analog converter to convert the digital input data into analog signals and modulating optical waves based on the analog signals by an optical modulator, thereby generating the optical signals carrying the input data. The optical signals are then transmitted to a photonic computing module including the photonic multipliers for performing the multiplication.

In some embodiments, in step S1, the initial input data includes an initial approximate solution to the problem determined by the weight matrix, and in S3, the output data includes an updated approximate solution to the problem determined by the weight matrix.

In some embodiments, in step S3, converting the optical signal resulting from the multiplication into the output data comprises converting the optical signals processed by the photonic multipliers into analog electrical signals using a photoelectric converter (such as a photodiode), followed by converting the analog electrical signals into digital electrical signals through an analog-to-digital converter. The resulting digital electrical signal, typically a binary signal composed of 0s and 1s, represents the output data.

In some embodiments, steps S1 through S3 are executed in a loop, where the output data from the previous cycle forms the input data for the current cycle, and each cycle's output data forms a sequence of data. This data sequence represents a series of updated approximate solutions to the problem determined by the weight matrix. In certain embodiments, the problem determined by the weight matrix includes any one or combination of the following: data clustering, labeling, classification, and semantic segmentation. The data sequence represents a series of updated approximate solutions to one or more of the following: data clustering, labeling, classification, or semantic segmentation.

In some embodiments, the weight matrix is determined by a weighted graph, where the vertices correspond to data points, and the edges correspond to the weights that reflect the correlations or interconnections between pairs of the data points. In some embodiments, the weights in the weighted graph are determined by mutual correspondence between data points and the goals of one or any combination of the following: data clustering, labeling, classification, and semantic segmentation. In some embodiments, if adjacent data points are attracted to or correlated with each other, the corresponding weight is positive; if the adjacent data points are neutral or uncorrelated, the corresponding weight is zero; if the adjacent data points are repulsive or anticorrelated, the corresponding weight is negative.

In some embodiments, the initial input data includes a plurality of vectors with numerical components, which is used to determine cluster assignments, data labels, data classes, and semantic data segments by performing clustering, labeling, classification, and/or semantic segmentation on the numerical components.

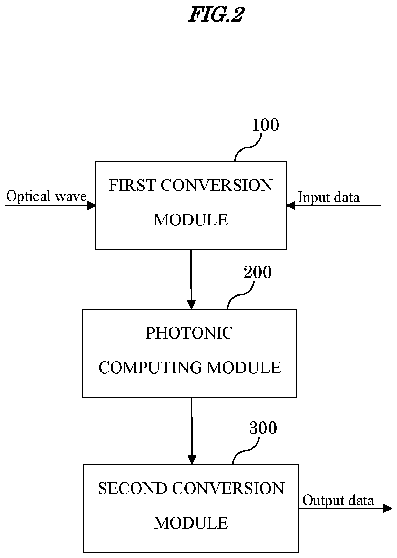

Figures 2 to 4 illustrate various embodiments of the system capable of executing the method described in any of the aforementioned embodiments of the present invention.

Referring to Figure 2, it shows an example of a system for data processing according to an embodiment of the present invention. In this embodiment, the system comprises:
A first conversion module 100, which is used for converting input data into optical signals;
A photonic computing module 200, in communication with the first conversion module 100, comprising a plurality of photonic multipliers. The photonic computing module 200 is configured to perform matrix-vector multiplication on the input data carried by the optical signal and the weight matrix using the plurality of photonic multipliers. The weight matrix determines the problem to be solved by the data processing; and
A second conversion module 300, in communication with the photonic computing module 200, for converting the optical signals resulting from the multiplication into output data.

In some embodiments, the first conversion module 100 includes a digital-to-analog converter (DAC) for converting the input data into analog input signals, and an optical modulator, in communication with the DAC, that modulates optical waves based on the analog input signals. The optical signals carrying the input data are generated through the modulation of the optical wave. In some embodiments, the modulator includes micro-ring modulators, MZI modulators, electro-absorption modulators, etc.

In some embodiments, the second conversion module 300 includes a photoelectric converter and an analog-to-digital converter (ADC). The photoelectric converter is in communication with the photonic computing module 200 to convert the optical signals resulting from the multiplication into analog output signals; the ADC is in communication with the photoelectric converter and converts the analog output signals into digital output signals, which serves as the output data. In some embodiments, the ADC has a threshold that is used for digitizing the analog output signal into a binary signal, where the digital output signal consists of 0s and 1s. In some embodiments, the photoelectric converter includes photodiodes, photodetectors, and similar devices.

In some embodiments, the initial input data of the first conversion module 100 includes an initial approximate solution to the problem determined by the weight matrix; the output data of the second conversion module 300 includes an updated approximate solution to the problem determined by the weight matrix. The problem determined by the weight matrix may include one or any combination of in the following: data clustering, labeling, classification, and semantic segmentation, and the output data includes updated approximate solutions to any one or combination of these problems.

In some embodiments, the system also includes a light source for generating the optical wave or an optical coupler for receiving the optical wave generated by an external light source. In some embodiments, the system further includes a guiding controller for providing the weight matrix. In some embodiments, the system also includes a digital memory unit for storing the input data and/or the output data.

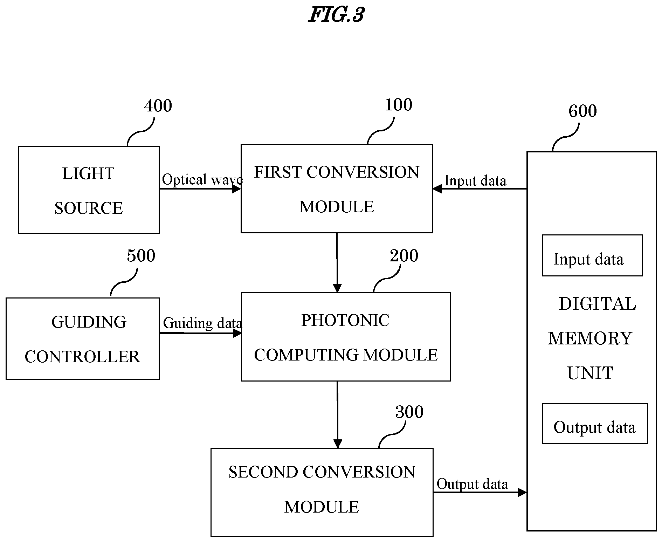

Figure 3 illustrates another example of the system for data processing according to an embodiment of the present invention. This embodiment shares the same first conversion module 100, photonic computing module 200, and second conversion module 300 as the embodiment shown in Figure 2. The distinction between the two is that the system in this embodiment further includes a light source 400, a guiding controller 500, and a digital memory unit 600. Specifically, the light source 400 generates optical waves, and the first conversion module 100 carries the input data onto the optical waves to generate the optical signals. For example, the first conversion module 100 can convert the input data into analog input signals by using a digital-to-analog converter, then modulate the optical waves based on the analog input signals by using an optical modulator to generate the optical signals. The optical signals are then provided to the photonic computing module 200. The guiding controller 500 provides guiding data to the photonic computing module 200. Optionally, the guiding data includes the weight matrix. The photonic computing module performs guidance by further modulating the optical signals based on the guiding transformation determined by the weights of the matrix, resulting in the guided optical signals. In some embodiments, the guiding transformation involves performing matrix-vector multiplication using the optical signal and the weight matrix in the photonic computing module 200. The second conversion module 300 converts the guided optical signals into digital output data, for example, by converting the guided optical signals into analog output signals via a photoelectric converter, and then converting the analog output signals into digital output data via an analog-to-digital converter. In this embodiment, the output data and input data are stored in the digital memory unit 600, and the output data can be provided as input data to the first conversion module 100, enabling iterative loop processing. This allows the output data to converge towards the desired solution for the problem determined by the weight matrix. In an alternative embodiment, the output data and the input data can be stored in different storage units. In some embodiments, the digital memory unit includes one of floppy disks, hard drives, random-access memory (RAM), read-only memory (ROM), erasable programmable read-only memory (EPROM or flash memory), compact disc read-only memory (CD-ROM), and optical storage devices, or any suitable combination thereof.

In some embodiments, the problem to be solved by the data processing is determined using the weight matrix; the initial input data of the first conversion module 100 includes an initial approximate solution to the problem; and the output data of the second conversion module 300 includes an updated approximate solution to the problem. The processing executed by the first conversion module 100, the photonic computing module 200, and the second conversion module 300 is performed in a loop, wherein the digital memory unit 600 uses the output data from the previous cycle as the input data for the current cycle. Each cycle's output data is stored in the digital memory unit 600 to form a data sequence, which represents a series of updated approximate solutions to the problem. In some embodiments, the problem determined by the weight matrix includes any one or combination of in the following: data clustering, labeling, classification, and semantic segmentation. In some embodiments, the initial input data includes a plurality of vectors with numerical components that determine cluster assignments, data labels, data classes, and semantic data segments by performing clustering, labeling, classification, and/or semantic segmentation on the numerical components.

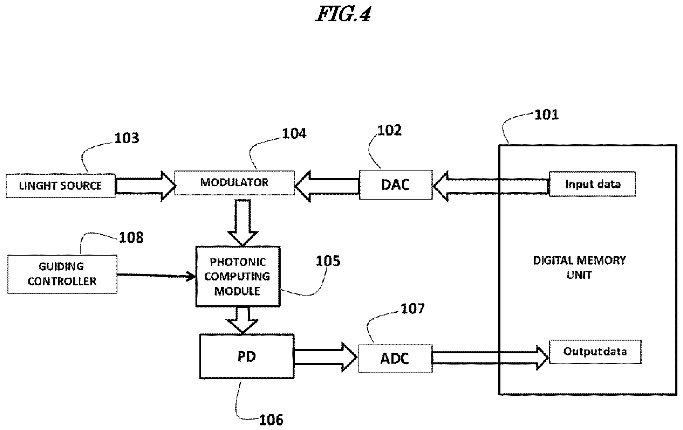

The framework of the system of the present invention has been described from the perspective of module structure above. The following will describe the circuit structure of the system with reference to Figure 4.

Figure 4 shows yet another example of the system for data processing according to an embodiment of the present invention. In this embodiment, the system at least includes a digital memory unit 101, a digital-to-analog converter (DAC) 102, a light source 103, a modulator 104, a photonic computing module 105, a photodetector (PD) 106, an analog-to-digital converter (ADC) 107, and a guiding controller 108. The DAC 102 and the modulator 104 can realize the functionality of the first conversion module described in the previous embodiments, while the photodetector 106 and the ADC 107 can perform the functions of the second conversion module described above. Below is a detailed description of the connections or coordination between the various components and the processing performed by each.

The digital memory unit 101 stores the input data, which may include an initial approximate solution to the problem determined by the weight matrix. The DAC 102 is in operational communication with the digital memory unit 101, and converts the input data into analog input signals.

The light source 103 is configured to generate optical waves. In some embodiments, the light source 103 includes a laser.

The modulator 104 is in optical communication with the light source 103 and in electronic communication with the DAC 102. The modulator 104 modulates the optical waves based on the analog input signals provided by the DAC 102 to generate modulated optical waves that carry the input data. In other words, the modulated optical waves serve as the optical signals carrying the input data.

The photonic computing module 105 is in operational communication with the guiding controller 108 and in optical communication with the modulator 104. The photonic computing module 105 includes a plurality of photonic multipliers and is used to guide the modulated optical waves to generate guided optical waves based on the guiding data provided by the guiding controller 108. In some embodiments, the guiding data includes the weight matrix, and the photonic computing module 105 guides the modulated optical waves by further modulating them based on the guiding transformation determined by the weights of the matrix. The guiding transformation may involve using the photonic multipliers to perform matrix-vector multiplication between the modulated optical waves and the weight matrix, resulting in guided optical waves.

The photodetector (PD) 106 is in optical communication with the photonic computing module 105 and used for converting the guided optical waves into analog output signals that carries the result data from the matrix-vector multiplication.

The analog-to-digital converter (ADC) 107 is in electronic communication with the photodetector 106 and converts the analog output signals into digital output signals, i.e., the output data. The ADC 107 is also in electronic communication with the digital memory unit 101 to store the output data in the digital memory unit 101. In some embodiments, the ADC 107 has a threshold to produce binary output, such as by combining with a thresholding unit to threshold the analog output signal into a digital output signal composed of binary signals (0s and 1s).

In some embodiments, the processing performed by the system is executed in a loop. Specifically, the digital memory unit 101 is operated to use the output data from the previous cycle to form input data for the current cycle, and store each cycle's output data in a data sequence. This data sequence approximates at least one solution to the problem determined by the weight matrix. In some embodiments, the problem determined by the weight matrix includes any one or a combination of in the following: data clustering, labeling, classification, and semantic segmentation. In some embodiments, the initial input data includes a plurality of vectors with numerical components, which is used to determine cluster assignments, data labels, data classes, and semantic data segments by performing clustering, labeling, classification, and/or semantic segmentation on the numerical components. The data sequence becomes a series of updated approximate solutions to any one or a combination of problems in data clustering, labeling, classification, and semantic segmentation.

According to this embodiment, the system not only improves computation speed by performing matrix-vector operations using photonic multipliers but also enhances data transmission speed through optical data transmission using optical communication. Therefore, the system significantly reduces the computation time and energy consumption required for solving problems related to data clustering, labeling, classification, and semantic segmentation.

In other embodiments of the present invention, matrix-vector operations using photonic multipliers alone can be used to reduce computation time and energy consumption for solving data clustering, labeling, classification, and semantic segmentation problems. Alternatively, only optical data transmission can be employed to achieve the same reductions in computation time and energy consumption for such problems.

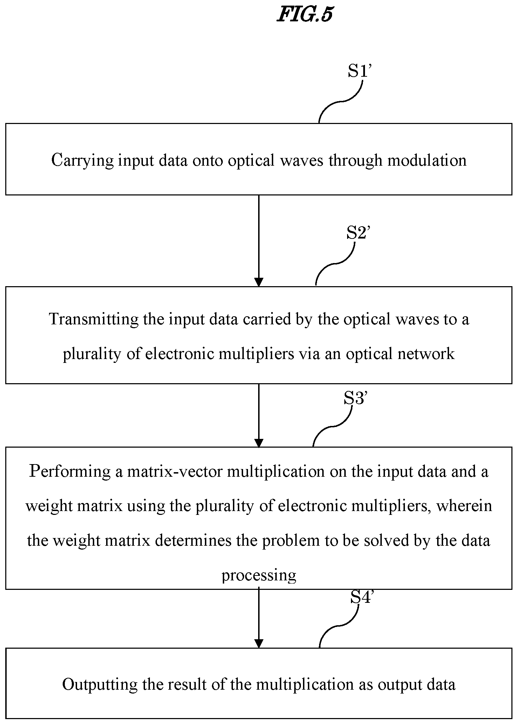

Figure 5 illustrates a method for data processing according to another embodiment of the present invention. As shown in Figure 5, the method includes the following processes:
**S1':** Carrying input data onto optical waves through modulation;
**S2':** Transmitting the input data carried by the optical waves to a plurality of electronic multipliers via an optical network;
**S3':** Performing a matrix-vector multiplication on the input data and a weight matrix using the plurality of electronic multipliers, wherein the weight matrix determines the problem to be solved by the data processing; and
**S4':** Outputting the result of the multiplication as output data.

In some embodiments, the initial input data includes an initial approximate solution to the problem determined by the weight matrix. The output data includes an updated approximate solution to the problem. In some embodiments, the initial input data comprises a plurality of vectors with numerical components, which are used to determine cluster assignments, data labels, data classes, and semantic data segments by performing clustering, labeling, classification, and/or semantic segmentation on the numerical components. In some embodiments, the multiplication is performed by the electronic multipliers in a loop, with the output data from the previous cycle serving as the input data for the current cycle. Wherein the output data from each cycle forms a data sequence representing a series of updated approximate solutions to the problem determined by the weight matrix.

In some embodiments, the problem determined by the weight matrix includes one or a combination of in the following: data clustering, labeling, classification, and semantic segmentation. The data sequence represents a series of updated approximate solutions to any one or combination of these problems.

In some embodiments, the weight matrix is determined by a weighted graph. In this weighted graph, the vertices correspond to data points, and the edges correspond to weights that reflect the correlations or interconnections between data point pairs. In some embodiments, the weights in the weighted graph are determined by mutual correspondence between data points and the goals of one or any combination of the following: data clustering, labeling, classification, and semantic segmentation. In some embodiments, if adjacent data points are attracted to or correlated with each other, the corresponding weight is positive; if the adjacent data points are neutral or uncorrelated, the corresponding weight is zero; if the adjacent data points are repulsive or anticorrelated, the corresponding weight is negative.

In some embodiments, the multiple electronic multipliers communicate with each other through the optical network.

According to the embodiment of the present invention, although the matrix-vector multiplication is performed by the electronic multipliers, the data transmission utilizes the optical network, specifically optical communication. This greatly reduces the time required for data transmission, thereby reducing the computational time and energy consumption for solving data clustering, labeling, classification, and semantic segmentation problems.

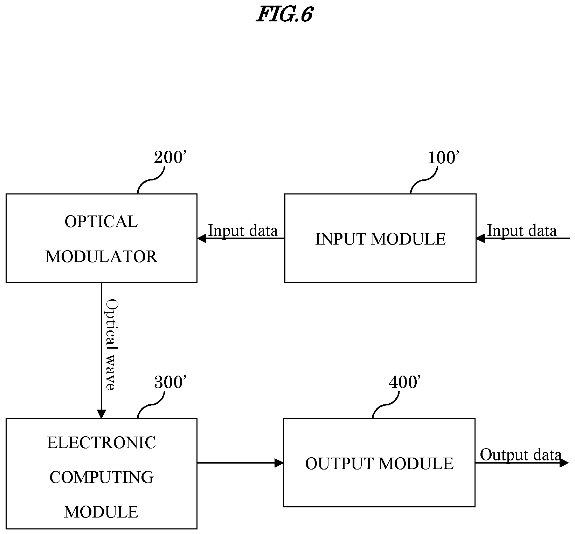

Figures 6 to 8 illustrate different embodiments of a system for data processing according to the present invention that can execute the methods described in the above embodiments.

Figure 6 shows an example of a system for data processing according to another embodiment of the present invention. In this embodiment, the system includes an input module 100', an optical modulator 200', an electronic computing module 300', and an output module 400'. The input module 100' is used for inputting data, where "inputting" includes but is not limited to receiving, processing, transmitting, or forwarding data. For example, the input data can be received, converted into analog input signals, and passed to the optical modulator 200'. The optical modulator 200' is used for carrying the input data onto optical waves, such as by modulating the optical waves based on the analog input signals. In some embodiments, the system also includes a light source for generating the optical waves or an optical coupler for inputting the optical waves generated by an external light source. In this embodiment, the input data carried by the optical waves is transmitted to the electronic computing module 300' via an optical network. In some embodiments, a photoelectric converter, such as a photodetector, is used to convert the optical waves into analog electrical signals, which are then digitized via analog-to-digital conversion to obtain digital input data. This digital input data is then passed to the electronic computing module 300'. The electronic computing module 300' comprises a plurality of electronic multipliers, and is configured to receive the input data carried by the optical waves via the optical network and perform a matrix-vector multiplication on the input data and a weight matrix using the plurality of electronic multipliers to, wherein the problem to be solved by the data processing is determined by the weight matrix. The output module 400' communicates with the electronic computing module 300' to output the result of the matrix-vector multiplication as output data. The output module 400' can communicate electronically with the electronic computing module 300' directly or communicate optically via an optical network. In some embodiments, the data resulting from the multiplication may be converted into optical signals via digital-to-analog conversion and electro-optic modulation, and then transmitted through the optical network. Upon receiving the optical signals, they can be converted into digital output data through photoelectric and analog-to-digital conversions, and then output via the output module 400'.

In some embodiments, the optical modulator and the optical network can be configured within one or more photonic chips. In some embodiments, one or more of the input module, the electronic multipliers, and the output module can be configured within one or more electronic chips. In some embodiments, the electronic chips are mounted above or below the photonic chip, with the electronic chips communicating with each other via the optical network in the photonic chip. This allows for communication between the plurality of electronic multipliers via the optical network, further reducing data transmission time.

In some embodiments, the initial input data includes an initial approximate solution to the problem determined by the weight matrix, and the output data includes an updated approximate solution to the problem determined by the weight matrix. In some embodiments, the problem determined by the weight matrix includes one or any combination of in the following: data clustering, labeling, classification, and semantic segmentation. In some embodiments, the initial input data includes a plurality of vectors with numerical components, which is used to determine cluster assignments, data labels, data classes, and semantic data segments by performing clustering, labeling, classification, and/or semantic segmentation on the numerical components.

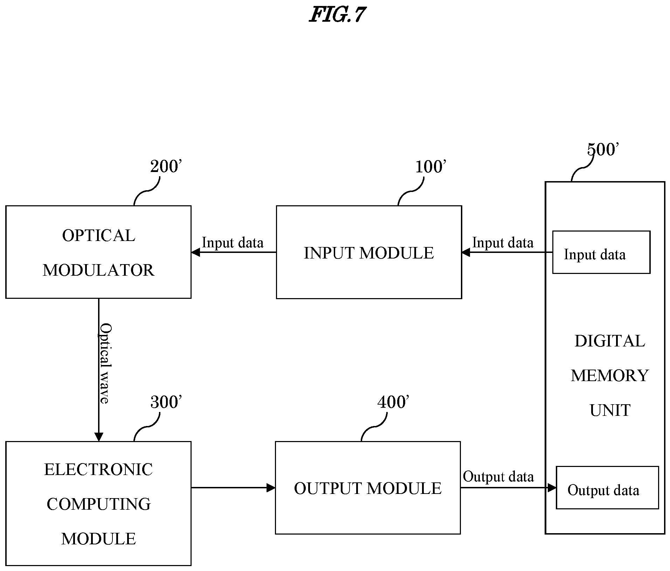

Figure 7 illustrates another example of a system for data processing according to another embodiment of the present invention. This embodiment has the same input module 100', optical modulator 200', electronic computing module 300', and output module 400' as the embodiment shown in Figure 6. The difference is that this embodiment further includes a digital memory unit 500'. Identical modules or components serve the same functions, the following description primarily focuses on the differences between the two embodiments.

The digital memory unit 500' is in communication with both the input module 100' and the output module 400', and used for storing both input data and output data. In an alternative embodiment, the output data and input data can be stored in different storage units. In some embodiments, the digital memory unit 500' may include one or any combination of the following: floppy disks, hard disks, random access memory (RAM), read-only memory (ROM), erasable programmable read-only memory (EPROM or flash memory), compact disc read-only memory (CD-ROM), and optical storage devices.

In some embodiments, the electronic multipliers of the electronic computing module 300' perform the matrix-vector multiplication in a loop. In this process, the digital memory unit 500' is operated to use the output data from the previous cycle to form the input data for the current cycle. The output data from each cycle is stored in the digital memory unit 500' to form a data sequence, which is a series of updated approximate solutions to the problem determined by the weight matrix. For example, the problem determined by the weight matrix includes any one or combination of in the following: data clustering, labeling, classification, or semantic segmentation. The initial input data includes a plurality of vectors with numerical components that determine cluster assignments, data labels, data classes, and semantic data segments by performing clustering, labeling, classification, and/or the semantic segmentation on the numerical components. The data sequence represents a series of updated approximate solutions to any one or combination of problems in data clustering, labeling, classification, or semantic segmentation.

In some embodiments, communication between the digital memory unit 500' and the input module 100' and/or output module 400' may be conducted via optical communication, meaning optical data transmission through an optical network. For example, the output data from the output module 400' can be converted into optical signals via digital-to-analog conversion and electro-optic modulation. The optical signals carrying the output data are then propagated through the optical network. Upon receiving the optical signals, the optical signals can be converted into the output data through photoelectric and analog-to-digital conversions, and the output data can be stored in the digital memory unit 500'. Alternatively, or additionally, the input data output by the digital memory unit 500' can be converted into optical signals through digital-to-analog conversion and electro-optic modulation. The optical signals carrying the input data are propagated through the optical network. Upon receiving the optical signals, the optical signals can be converted into the input data via photoelectric and analog-to-digital conversions and then the input data is sent to the input module 100'.

In some embodiments, one or more of the input module 100', electronic computing module 300', output module 400', and digital memory unit 500' may be configured in one or more electronic chips, while the optical modulator 200' and optical network may be configured in one or more photonic chips. In some embodiments, the optical network may include the optical modulator 200'.

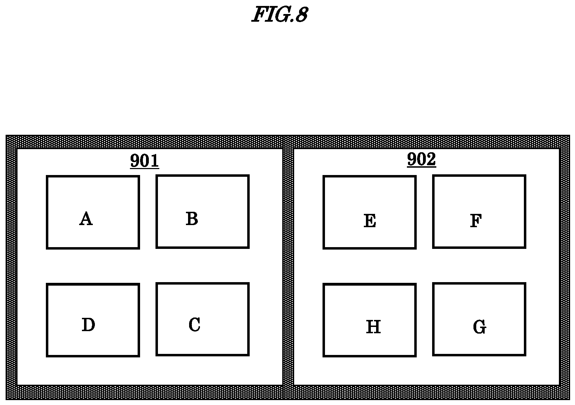

Figure 8 illustrates yet another example of a system for data processing according to another embodiment of the present invention. In this embodiment, as shown in Figure 8, the system includes two photonic chips 901 and 902, and eight electronic chips labeled A to H. The photonic chips 901 and 902 have an optical network, which may include optical waveguides, multiple optical modulators, and photodetectors to facilitate optical communication. The input module is configured in electronic chip A, the digital memory unit is configured in electronic chip H, and the output module is configured in electronic chip G. Electronic chips B to F each include one or more electronic multipliers, corresponding to the electronic computing module. Additionally, electronic chips A to D are mounted on photonic chip 901, while electronic chips E to H are mounted on photonic chip 902. Communication between photonic chip 901 and photonic chip 902 can be established through connecting optical fibers and corresponding optical couplers.

An external light source generates optical waves that are coupled into the system through an optical coupler (not shown). Electronic chip A (with the input module) is in optical communication with electronic chip H (with the digital memory unit) via the optical network in photonic chips 901 and 902, as well as through the connecting optical fiber. The input data stored in electronic chip H is input to electronic chip A, and can be carried onto optical waves through modulation by optical modulators in photonic chip 901. The optical waves travel through the optical network in photonic chips 901 and 902 and the connecting optical fiber to electronic chips B to F (each containing electronic multipliers). Electronic chips B to F communicate with each other through the optical network, receive the input data carried by the optical waves, and perform a matrix-vector multiplication on the input data. The computation results are carried onto optical waves through modulation and transmitted through the optical network in photonic chips 901 and 902 and the connecting optical fiber to electronic chip G (with the output module). Electronic chip G organizes the computation results into output data, which is then carried onto optical waves through modulation and transmitted through the optical network in photonic chip 902 to electronic chip H (with the digital memory unit), where the output data is stored.

In this embodiment, while matrix-vector multiplication is performed by the electronic chips, data transmission is carried out through the optical network in the photonic chips, significantly reducing data transmission time and energy consumption, thereby improving system processing speed. In alternative embodiments, the system can be configured so that electronic chips B to F communicate via the optical network to carry out matrix-vector multiplication, while the other electronic chips use electronic communication, still achieving the same benefits of reduced data transmission time, lower energy consumption, and faster processing speed. In other embodiment, electronic chips B to F may communicate electronically for matrix-vector multiplication, while one or more other electronic chips use optical communication, which can still offer advantages over purely electronic processing in terms of speed and energy efficiency.

In this embodiment, the system utilizes eight electronic chips and two photonic chips. However, the invention is not limited to this configuration. Alternative embodiments may use one photonic chip, or three or more photonic chips. Similarly, fewer or more than eight electronic chips may be used for tasks such as data storage, input, computation, and/or output.

By using photonic chips to configure the optical network and mounting electronic chips on the photonic chips, embodiments achieve high bandwidth, low latency, low power consumption, high integration density, and strong electromagnetic interference resistance.

It should be understood by those skilled in the art that the above disclosure represents merely embodiments of the invention and should not be construed as limiting the scope of the invention's claims. Any modifications made in accordance with the embodiments of the invention are within the scope of the invention's claims.

## Claims

1. A method for data processing, comprising:
converting input data into optical signals;
performing a matrix-vector multiplication on the input data carried by the optical signals and a weight matrix using a plurality of photonic multipliers, wherein the weight matrix determines the problem to be solved by the data processing; and
converting the optical signals resulting from the multiplication into output data.

2. A method for data processing, comprising:
carrying input data onto optical waves through modulation;
transmitting the input data carried by the optical waves, through an optical network, to a plurality of electronic multipliers;
performing a matrix-vector multiplication on the input data and a weight matrix using the plurality of electronic multipliers, wherein the weight matrix determines the problem to be solved by the data processing; and
outputting the result of the multiplication as output data.

3. The method according to claim 1 or 2, wherein the initial input data comprises an initial approximate solution to the problem determined by the weight matrix, and
wherein the output data includes an updated approximate solution to the problem determined by the weight matrix.

4. The method according to claim 3, wherein the matrix-vector multiplication is performed in a loop, with the output data from the previous cycle serving as the input data for the current cycle,
wherein the output data from each cycle forms a sequence of updated approximate solutions to the problem determined by the weight matrix.

5. The method according to claim 1 or 2, wherein the problem determined by the weight matrix includes one or any combination of the following: data clustering, labeling, classification, and semantic segmentation.

6. The method according to claim 5, wherein the weight matrix is determined by a weighted graph.

7. The method according to claim 6, wherein the vertices of the weighted graph correspond to data points, and the edges correspond to the weights that reflect the correlations or interconnections between pairs of the data points.

8. The method according to claim 7, wherein the weights in the weighted graph are determined by mutual correspondence between data points and the goals of one or any combination of the following: data clustering, labeling, classification, and semantic segmentation.

9. The method according to claim 8, wherein: if adjacent data points are attracted to or correlated with each other, the corresponding weight is positive;
if the adjacent data points are neutral or uncorrelated, the corresponding weight is zero;
if the adjacent data points are repulsive or anticorrelated, the corresponding weight is negative.

10. The method according to claim 5, wherein the initial input data includes a plurality of vectors with numerical components, which is used to determines cluster assignments, data labels, data classes, and semantic data segments by performing clustering, labeling, classification, and/or semantic segmentation on the numerical components.

11. The method according to claim 2, wherein the plurality of electronic multipliers communicates with each other via the optical network.

12. A system for data processing, comprising:
a first conversion module for converting input data into optical signals;
a photonic computing module, in communication with the first conversion module, comprising a plurality of photonic multipliers, wherein the photonic computing module is configured to perform a matrix-vector multiplication on the input data carried by the optical signals and a weight matrix, using the plurality of photonic multipliers, wherein the weight matrix determines the problem to be solved by the data processing; and
a second conversion module, in communication with the photonic computing module, for converting the optical signals resulting from the multiplication into output data.

13. The system according to claim 12, wherein the first conversion module comprises:
a digital-to-analog converter for converting the input data into analog input signals;
an optical modulator, in communication with the digital-to-analog converter, for modulating the analog input signals onto optical waves to generate the optical signals.

14. The system according to claim 12, wherein the second conversion module includes:
a photoelectric converter, in communication with the photonic computing module, for converting the optical signals resulting from the multiplication into analog output signals;
an analog-to-digital converter, in communication with the photoelectric converter, for converting the analog output signals into digital output signals.

15. The system according to any of claims 12 to 14, further comprising a guiding controller, in communication with the photonic computing module, to provide the weight matrix.

16. The system according to claim 12, wherein the initial input data of the first conversion module includes an initial approximate solution to the problem determined by the weight matrix, and
wherein the output data of the second conversion module includes an updated approximate solution to the problem determined by the weight matrix.

17. The system according to claim 16, further comprising a digital memory unit, in communication with the first and second conversion modules, for storing the input data and output data;
wherein the processes performed by the first conversion module, photonic computing module, and second conversion module are executed in a loop, with the digital memory unit using the output data from the previous cycle as the input data for the current cycle, and storing the output data from each cycle as a sequence of updated approximate solutions to the problem determined by the weight matrix.

18. The system according to claim 12, wherein the problem determined by the weight matrix includes one or any combination of the following: data clustering, labeling, classification, and semantic segmentation.

19. The system according to claim 18, wherein the initial input data includes a plurality of vectors with numerical components, which is used to determine cluster assignments, data labels, data classes, and semantic data segments by performing clustering, labeling, classification, and/or semantic segmentation on the numerical components.

20. A system for data processing, comprising:
an input module for inputting input data;
an optical modulator for carrying the input data onto optical waves through modulation;
an electronic computing module, in communication with the optical modulator via an optical network, comprising a plurality of electronic multipliers, wherein the electronic computing module is configured to receive the input data carried by the optical waves through the optical network and perform a matrix-vector multiplication on the input data and a weight matrix, using the plurality of electronic multipliers, wherein the weight matrix determines the problem to be solved by the data processing; and
an output module, in communication with the electronic computing module, for outputting the result of the multiplication as output data.

21. The system according to claim 20, wherein the optical modulator and optical network are configured within one or more photonic chips.

22. The system according to claim 21, wherein any one or more of the input module, electronic multipliers, and output module are configured within one or more electronic chips.

23. The system according to claim 22, wherein the electronic chips are mounted above or below the photonic chips, and
wherein the electronic chips communicate with each other through the optical network in the photonic chips.

24. The system according to claim 20, wherein the output module communicates with the electronic computing module through the optical network, with the data resulting from the multiplication being carried onto optical waves through modulation and transmitted via the optical network to the output module.

25. The system according to claim 20, wherein the initial input data of the input module includes an initial approximate solution to the problem determined by the weight matrix,
wherein the output data of the output module includes an updated approximate solution to the problem determined by the weight matrix.

26. The system according to claim 25, further comprising a digital memory unit, in communication with the input module and the output module, for storing the input and output data;
wherein the electronic multipliers perform the matrix-vector multiplication in a loop, with the digital memory unit using the output data from the previous cycle as the input data for the current cycle, and storing the output data from each cycle as a sequence of updated approximate solutions to the problem determined by the weight matrix.

27. The system according to claim 20, wherein the problem determined by the weight matrix includes one or any combination of the following: data clustering, labeling, classification, and semantic segmentation.

28. The system according to claim 27, wherein the initial input data includes a plurality of vectors with numerical components, which is used to determine cluster assignments, data labels, data classes, and semantic data segments by performing clustering, labeling, classification, and/or semantic segmentation on the numerical components.
